# EUROPÄISCHE PATENTSCHRIFT

(11) **EP 1 967 755 B1**
(45) Veröffentlichungstag und Bekanntmachung des Hinweises auf die Patenterteilung: **18.11.2009**
(21) Anmeldenummer: 07103718.8
(22) Anmeldetag: 07.03.2007
(51) Int. Cl.: F16D 65/06

(54) **Bremsklotz für Reibungsbremsen von Schienenfahrzeugen**
Brake pad for friction brakes of railway vehicles
Plaquette pour feins à friction de véhicules ferroviaires

(43) Veröffentlichungstag der Anmeldung: 10.09.2008
(73) Patentinhaber: Eisenwerk Arnstadt GmbH, 99310 Arnstadt (DE)
(72) Erfinder: Köcher, Udo, DE-98716 Geraberg (DE); Herzig, Uwe, DE- 99310 Amstadt (DE)
(74) Vertreter: Liedtke, Klaus

(56) Entgegenhaltungen:
- EP-A1- 0 362 131
- FR-A- 791 041
- FR-A- 1 034 322
- FR-A- 1 103 866
- GB-A- 403 014
- GB-A- 190 911 456
- US-A- 1 177 440
- US-A- 2 331 563
- US-A- 3 140 762
- ABBASI ET AL: "Effect of phosphorus as an alloying element on microstructure and mechanical properties of pearlitic gray cast iron" MATERIALS SCIENCE AND ENGINEERING A: STRUCTURAL MATERIALS: PROPERTIES, MICROSTRUCTURE & PROCESSING, LAUSANNE, CH, Bd. 444, Nr. 1-2, 9. Dezember 2006 (2006-12-09), Seiten 314-317, XP005799944 ISSN: 0921-5093

## Beschreibung

Die Erfindung betrifft einen Bremsklotz für Reibungsbremsen von Schienenfahrzeugen mit einer verschleißfesten Bremssohle aus phosphorhaltigem Gusseisen, deren Reibfläche entsprechend dem Umfang des zu bremsenden Laufrades gekrümmt ist, und mit einer Bruchsicherung des Gussteils durch eine wenigstens teilweise umgossene Stahlarmierung, wobei vom Bremsrücken des Bremsklotzes eine Querbrücke zur Übertragung der von der Bremsanlage erzeugten Bremskraft absteht.

Eine derartiger Bremsklotz ist aus der US 1,749,760 bereits bekannt, wobei der Bremsklotz einen vorgefertigten Stahlblechrücken, eine daran angegossene Bremssohle und eine teilweise eingegossene Querbrücke zur Halterung des Bremsklotzes aus einem mehrfach abgekanteten Blechbiegeteil umfasst. Das Blechbiegeteil selbst weist eine U-förmige Grundform auf, wobei der Abstand der seitlichen Schenkel voneinander auf die Breite eines verjüngten Mittelabschnittes des Stahlblechrückens abgestimmt ist. Die unteren Endbereiche der seitlichen Schenkel des Blechbiegeteils sind aufeinander zu rechtwinklig abgekantet und auf der konkaven Innenumfangsseite des Stahlblechrückens verschweißt. Zur besseren Verankerung des Stahlblechrückens im daran angegossenen Gussmaterial der Bremssohle, stehen von der Innenumfangsseite des Blechrückens insgesamt 12 Blechzungen radial ab. Diese Blechzungen bestehen aus abgebogenen Laschen des Stahlblechrückens selbst, die durch annähernd kreisförmiges Umstanzen bis auf einen kleinen Steg freigeschnitten und anschließend hochgestellt wurden. Dabei sind die Blechzungen zweier spiegelsymmetrischer Lochreihen so abgebogen, dass sie einander von der Seite aus gesehen kreuzen. Zusätzlich sind in den Endbereichen des Stahlblechrückens jeweils zwei, von dessen Ende ausgehende, parallele Einschnitte im Blechrücken vorgesehen. Die durch seitliche Einschnitte gewonnenen Blechstege sind abgekantet und stehen etwa radial vom Innenumfang des Blechrückens ab.

Als nachteilig kann bei diesem bekannten Bremsklotz der Umstand angesehen werden, dass der Blechrücken trotz seiner integralen Bauweise fertigungstechnisch aufwendig vorgefertigt werden muss. Durch das für die Herstellung des Bremsklotzes erforderliche Verfahren zum Angießen der Bremssohle kann sich außerdem ein Blechrücken ergeben, dessen Maßhaltigkeit nicht ausreicht, so dass er mit großem Zeiteinsatz nachbearbeitet werden muss. Insgesamt ist die Herstellung des bekannten Bremsklotzes aufwendig und somit teuer. Außerdem ist unklar, ob die Armierung des Bremsklotzes über den Blechrücken als Bruchschutzsystem auch ausreicht, wenn die Bremssohle relativ spröde ist, weil sie aus Gusseisen mit hohem Phosphorgehalt besteht.

Von serienmäßig bei Schienenfahrzeugen eingesetzten Bremsklötzen z. B. dem handelsüblichen Bremsklotz (z. B. Samson**)** ist es zudem bekannt, die Bremssohle aus phosphorhaltigem Eisenguss an einen gebogenen Stahlblechrücken anzugießen. Dieses Stahlblechteil umfasst auch eine bügelförmige Brücke, über die der Bremsschuh in seiner Einbaulage zentral an seinem Bremskopf gelagert ist, der beim Einleiten der Bremsung auf den Abrollumfang des zu bremsenden Rades zu bewegt wird. Auf der Innenumfangsseite des Blechrückens sind mehrere übereinander geschichtete Lagen von Blechgittern aus Streckmetall durch Schweißen befestigt sind. Das Flacheisen und die Blechgitter erstrecken sich nahezu über die gesamte Umfangslänge des Bremsschuhs und die Blechgitter auch über die überwiegende Breite desselben. Beim Angießen der Bremssohle an den Stahlblechrücken werden die Blechgitter somit vollständig in den Guss der Bremssohle eingebettet, so dass sich ein festes Verbundteil ergibt. Durch die Gesamtdicke des Stapels aus Streckmetall wird aber die nutzbare Dicke der Bremsklotzsohle und damit deren mögliche Lebensdauer deutlich reduziert. Die Bruchsicherheit und Funktionstüchtigkeit dieser bewährten Konstruktion ist zwar sehr groß, jedoch ist auch dieser Bremsklotz fertigungstechnisch aufwendig gestaltet und entsprechend teuer in der Herstellung.

Ferner ist es bekannt, einen Bremsklotzrücken mit hoher Festigkeit - z. B. aus Stahl- oder Sphäroguss - vorzugießen, diesen in die Gießform einzulegen und den phosphorhaltigeren Eisenguss der Bremssohle anzugießen. Hierdurch kann aber die konstruktiv mögliche Dicke der Bremssohle bei vorgegebenen Einbauverhältnissen deutlich reduziert sein, da der mit der Bremssohle versehene Bremsklotzrücken als Stahlguss- oder Kugelgraphitgussteil relativ dick sein muss. Außerdem verfügen Stahl- oder Sphäroguss nicht über ein vergleichbar vorteilhaftes Bruchdehnungsverhalten, wie es z. B. bei üblichen Knetlegierungen aus Stahlblech als Bruchsicherung der Fall ist. Zudem ist das Gießverfahren mit zwei Durchgängen zeitaufwendig und entsprechend teuer.

In der EP 0 026 578 A1 ist ein Bremsklotz für Reibungsbremsen von Schienenfahrzeugen offenbart, der einen gebogenen Stahlrücken aufweist. Vom Stahlrücken stehen über dessen Länge verteilt mehrere Gussblöcke ab, die an den Stahlrücken angegossen und jeweils durch radial vom Stahlrücken abstehende Metalleinlagen verstärkt sind. Die mit Abstand aneinandergereihten Gussblöcke des Bremsklotzes bilden gemeinsam dessen Bremssohle und sollen zur Erzielung der gewünschten Eigenschaften einen Phosphorgehalt von mehr als 5 Gew.-% aufweisen. Der Stahlrücken und die von diesem abstehenden Stahlverstärkungen der segmentierten Bremssohle müssen konstruktiv sehr biegesteif gestaltet werden, um ein Verkanten der Gussblöcke unter den auf ihre Reibseite einwirkenden Kräften beim Bremsvorgang zuverlässig zu verhindern. Ein solches Verkanten würde in unerwünschter Weise zu einem erhöhten Verschleiß der Bremssohle und zu einer verstärkten Riffelbildung an der Lauffläche des beaufschlagten Rades führen. Bei Einhaltung der konstruktiven Anforderungen wäre auch ein derartiger Bremsklotz relativ teuer in der Herstellung.

Die gattungsbildende FR 1103 866 offenbart einen Bremsklotz gemäß dem Oberbegriff des Anspruchs 1.

Der Erfindung liegt die Aufgabe zu Grunde, einen Bremsklotz der im Oberbegriff des Patentanspruchs 1 angegebenen Art dahingehend zu verbessern, dass er sich ohne Nachteile für seine Bruchsicherheit kostengünstig herstellen lässt.

Die Aufgabe wird erfindungsgemäß dadurch gelöst, dass Bremssohle und Vorzugsweise besteht das integrale Gussteil aus einer thermisch und mechanisch hoch belastbaren Gusslegierung, deren Härte nicht größer als 275 HB ist, wobei die Gusslegierung aus einem Basiseisen mit der Zusammensetzung

| | | |
|---|---|---|
| C | 2,6 bis 3,4 | Gew.-% |
| Si | 1,2 bis 2,6 | Gew.-% |
| P | 2,0 bis 3,5 | Gew.-% |
| Mn | < 0,9 | Gew.-% |
| S | < 0,2 | Gew.-% |

besteht, dem kleine Mengen von Kupfer und/oder Vanadium und/oder Cer und/oder Seltenerd-Mineralien zulegiert sind. Bremsklötze aus diesen Legierungen weisen gegenüber bekannten Legierungen ein wesentlich verbessertes Bruchdehnungsverhalten auf. Somit können die Mittel zur Bruchsicherung konstruktiv relativ schwach ausgelegt werden, wodurch sie entsprechend weniger Platz im Gussstück einnehmen.

Vorteilhafte Ausgestaltungen der Erfindung sind Gegenstand der Unteransprüche.

Vorzugsweise besteht die Stahlarmierung des Bremsklotzes aus Flachmaterial, das eine geringe Dicke aufweist, und nahe seiner konvex gekrümmten Rückseite in das Gussteil eingebettet ist. Hierdurch ergibt sich eine große nutzbare Dicke der Bremssohle.

Dieser Vorteil bleibt bei einer sich nahezu über die gesamte Länge des Bremsklotzes erstreckenden Stahlarmierung erhalten, wenn das Flachmaterial über seine Länge unter Anpassung an die Krümmung der Reibfläche des Bremsklotzes gebogen ist.

Eine kompakte Stahlarmierung kann von der Kombination einer schmalen Einlage aus Bandstahl und einem darauf aufgeschweißten, breiten Streifen aus Loch- oder Gitterblech gebildet werden. Durch die Löcher bzw. Gitterfenster fließt die Schmelze des Gusseisens hindurch, wodurch das Loch- oder Gitterblech nach Erstarren der Schmelze absolut sicher im Gussblock verankert ist. Mit der Verwendung einer einzigen Lage dieses Gitter- oder Lochblechs bleibt die Gesamtdicke der zweiteiligen Kombination im Unterschied zur Verwendung von mehreren aufgeschweißten Gitterblechen in Stapelanordnung noch relativ gering.

Alternativ zu der kombinierten Stahlarmierung kann aber auch eine einzige Einlage aus Bandstahl als Stahlarmierung vorgesehen sein, die aber dann entsprechend verbreitert sein sollte. Eine sichere Verankerung dieser Einlage im Gussblock wird erreicht, wenn die Einlage mit einer ausreichenden Zahl von Durchbrüchen versehen ist, die beim Gießen von Schmelze durchflutet werden. Zusätzlich kann die Einlage ein Umfangsprofil mit zurückspringenden Bereichen aufweisen, durch die sich eine Verankerungscharakteristik ergibt.

Bei einer vorteilhaften Ausführungsform kann die schmale oder auch die breite Einlage aus Bandstahl, insbesondere in ihrem mittleren Längenbereich, mit einer eingeformten Sicke versehen sein. Diese Sicke kann in gewissem Umfang zur Biegeversteifung der Einlage selbst dienen. Ferner kann die Sicke als Abstandshalter mit einer Wand der Gussform zusammenwirken und somit zur sicheren Positionierung der Einlage in der Gussform beitragen. Werden die Enden der Einlage in der Gussform darüber hinaus über Haltemittel abgestützt, dann werden die sich an die Sicke anschließenden Längenbereiche der Einlage automatisch in einem optimalen Abstand zur Rückseite des Bremsklotzes in den Gussblock eingebettet.

Bei eingegossener Einlage ist die Sicke - vorzugsweise unter der Querbrücke - flächenbündig in die konkav gekrümmte Rückseite des Bremsklotzes eingepasst.

Um eine schnellere, ruhigere und mit verminderter Funkenbildung verlaufende Anpassung der Reibflächen des Bremsklotzes an die Lauffläche des zugeordneten Rades zu erreichen, sind in die Bremssohle über deren Länge verteilt mehrere Dehnfugen integriert, die von der Reibfläche der Bremssohle ausgehen und sich in Breitenrichtung der Bremssohle von der Seite bis etwa zur Sohlenmitte erstrecken. Daneben haben die Dehnfugen die Aufgabe, vom Laufrad abgestreifte Partikel aufzunehmen bzw. abzuführen und die Wärmeabfuhr der Bremssohle erheblich zu verbessern.

Eine besonders gute Wirkung der Dehnfugen ergibt sich, wenn diese abwechselnd von der linken und rechten Randseite des Bremsklotzes ausgehen. Die Dehnfugen dienen zusätzlich als Abfahrmarken für das Wartungspersonal.

Zur leichteren Sichtkontrolle des Verschleißzustandes des eingebauten Bremsklotzes sind an der Außenseite die Bremssohle, insbesondere in einem geringen Abstand zur Stahlarmierung zusätzlich mehrere Verschleißmarken angeordnet.

Ausführungsbeispiele der Erfindung werden im Folgenden anhand einer Zeichnung näher erläutert.

Darin zeigen:
- Figur 1: eine Draufsicht auf einen Bremsrücken eines Bremsklotzes für ein Schienenfahrzeug,
- Figur 2: eine Schnitt durch den Bremsklotz gemäß der Schnittlinie II-II in Figur 1,
- Figur 3: eine Seitenansicht des Bremsklotzes von Figur 1,
- Figur 4: einen dem Schnittlinienverlauf von Fig. 2 entsprechenden Schnitt durch eine Bremsklotzvariante,
- Figur 5: eine Unteransicht einer Stahlarmierungsvariante zur Ausführung des Bremsklotzes nach Figur 1,
- Figur 6: eine Seitenansicht der Stahlarmierungsvariante nach Figur 5,
- Figur 7: eine Draufsicht auf eine weitere Stahlarmierungsvariante zur Ausführung des Bremsklotzes nach Fig. 3,
- Figur 8: eine Seitenansicht der Stahlarmierungsvariante nach Figur 7,
- Figur 9: eine weitere Ausführung eines Bremsklotzes mit Stahlarmierung in Seitenansicht und
- Figur 10: eine Draufsicht auf die Reibfläche des Bremsklotzes nach Figur 9.

Einander entsprechende Teile sind in allen Figuren mit den gleichen Bezugszeichen versehen.

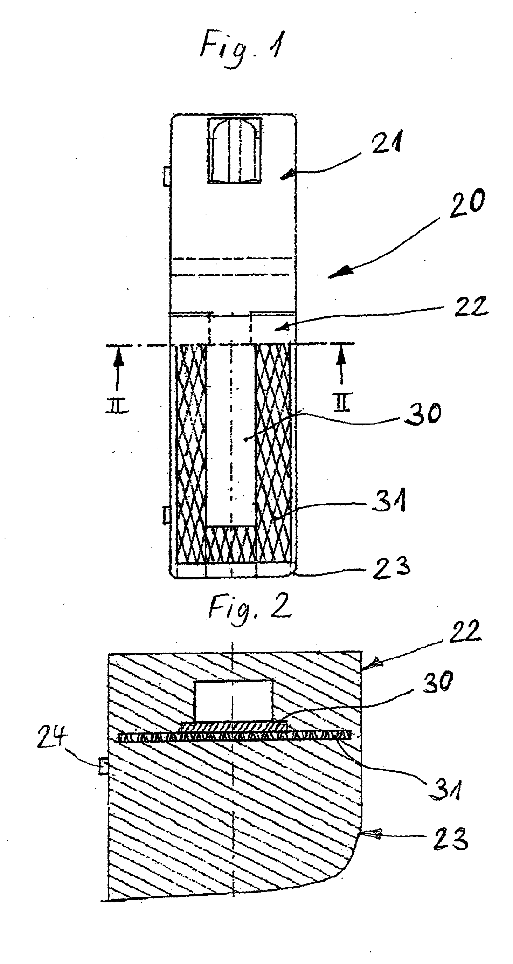

**Figur 1** zeigt eine Draufsicht auf einen separaten Bremsklotz 20 für ein Schienenfahrzeug, wobei in der oberen Hälfte der Bremsrücken 21 und in der aufgebrochen gezeichneten unteren Hälfte des Bremsklotzes 20 dessen Stahlarmierung zu sehen ist. Die Stahlarmierung umfasst bei der Ausführung gemäß Figur 1 eine schmale Einlage 30 aus Bandstahl beispielsweise mit einem Querschnitt von mindestens 100 mm² mit einer vorgebbaren Dicke und einer vorgebbaren Breite von, die sich entlang der Mittellängsachse des Bremsklotzes nahezu über dessen gesamte Länge erstreckt. Unter der Einlage 30 liegt an ihrer Breitseite ein Streckmetallgitter 31 aus Stahl auf, das gemeinsam mit der Einlage 30 die Stahlarmierung bildet und daher fest mit dieser verschweißt ist. Dabei liegen die Mittellängsachsen des Streckmetallgitters 31 und der Einlage 30 übereinander, jedoch steht das Streckmetallgitter 31 seitlich über, da es eine Breite von mindestens 70 mm aufweist. Auch an den Enden steht das Streckmetallgitter 31 gegenüber der Einlage 30 etwas über. Das Streckmetallgitter 31 besteht dabei aus einer 3 mm bis 4 mm dicken Stahlblechplatte, die mit einer Vielzahl von Einschnitten vorbereitet und anschließend gestreckt wurde, wobei die gitterartige Plattenstruktur entsteht. Solche Streckmetallgitter 31 sind zwar an sich zur Armierung von Bremsklötzen bekannt, jedoch nur in einer Stapelanordnung von sechs miteinander verbundenen Lagen. Hier wird jedoch lediglich eine einzige Lage des Streckmetallgitters 31 verwendet, so dass Einlage 30 und Streckmetallgitter 31 eine relativ geringe Gesamtdicke aufweisen.

Die Proportionen dieses Verbunds zum Gesamtquerschnitt des Bremsklotzes 20 sind in Verbindung mit der Schnittdarstellung nach **Fig. 2** deutlich zu erkennen. Aufgrund des Schnittverlaufes ist auch das Portal der Querbrücke 22 gut zu sehen, über die der Bremsklotz in seiner Einbaulage am nicht gezeigten Bremskopf der Bremsvorrichtung befestigt ist. Insgesamt ist offensichtlich, dass eine mit der Reibfläche versehene Bremssohle 23, der Bremsrücken 21 und auch die Querbrücke 22 einen gemeinsamen, einteiligen Gussblock bilden, in welche die Stahlarmierung aus Einlage 30 und Streckmetallgitter 31 eingebettet ist. Die Mantelflächen des Bremsklotzes 20 werden somit ganz überwiegend von Außenflächen des Gussblocks gebildet. Lediglich am Bremsrücken 21 ist die Einlage 30 so in den Gussblock eingebettet, dass sie den Bodenbereich der Querbrücke 22 aus Eisenguss bildet. Dieser Bereich, in dem die Einlage 30 flächenbündig im Bremsrücken versenkt ist, wird aber von der Querbrücke 22 überspannt. Über das eingegossene Streckmetallgitter 31 ist die Einlage 30 aber auch in diesem Bereich sicher im Gussblock verankert.

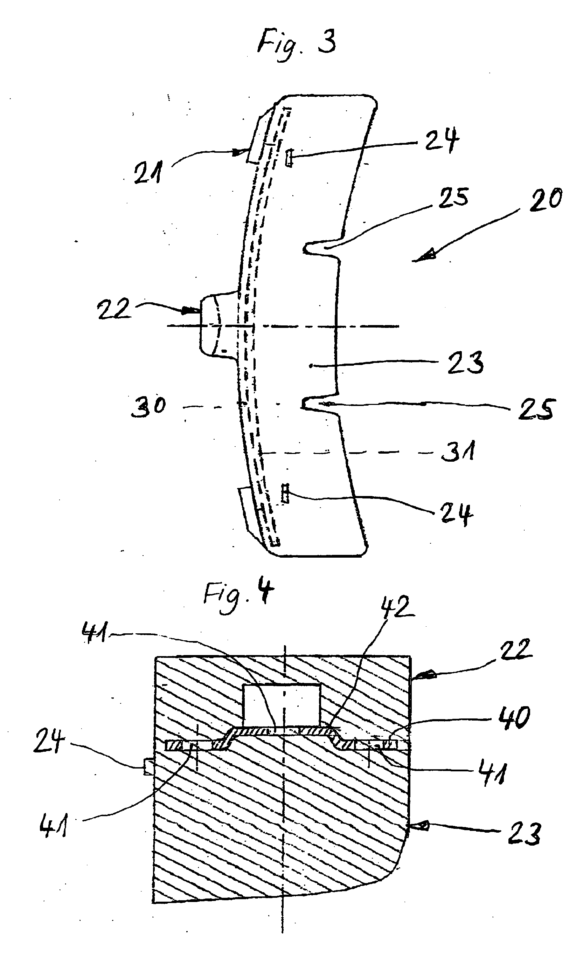

In Zusammenschau mit der Seitenansicht nach **Figur 3** sieht man, dass sich die Stahlarmierung nahezu über die gesamte Länge des Bremsklotzes 20 erstreckt und über seine Länge unter Anpassung an die Krümmung der Reibfläche der Bremssohle 23 gebogen ist, wobei die Krümmung der Reibfläche mit der Krümmung des Bremsrückens 21 weitgehend übereinstimmt. Dadurch liegt die Stahlarmierung so nah am Bremsrücken 21, dass die Verschleißdicke der Bremssohle 23 sehr groß gestaltet werden kann. Die maximale Verschleißgrenze der Bremssohle 23 ist durch zwei an der Außenseite angebrachte, insbesondere abstehende Verschleißmarken 24 zu erkennen, die ebenfalls an die Bremssohle 23 angegossen sind. Insgesamt steht also die ganz überwiegende Dicke der Bremssohle 20 für den Abrieb zur Verfügung. In die Bremssohle sind außerdem mehrere Dehnfugen 25 angeordnet, die das Einschleifen der Bremssohle 23 erleichtern sollen und der Wärmeabfuhr dienen. Diese Dehnfugen 25 sind über die Länge der Bremssohle 23 verteilt angeordnet, sind zur Reibfläche hin offen und erstrecken sich quer zur Bremssohle 23.

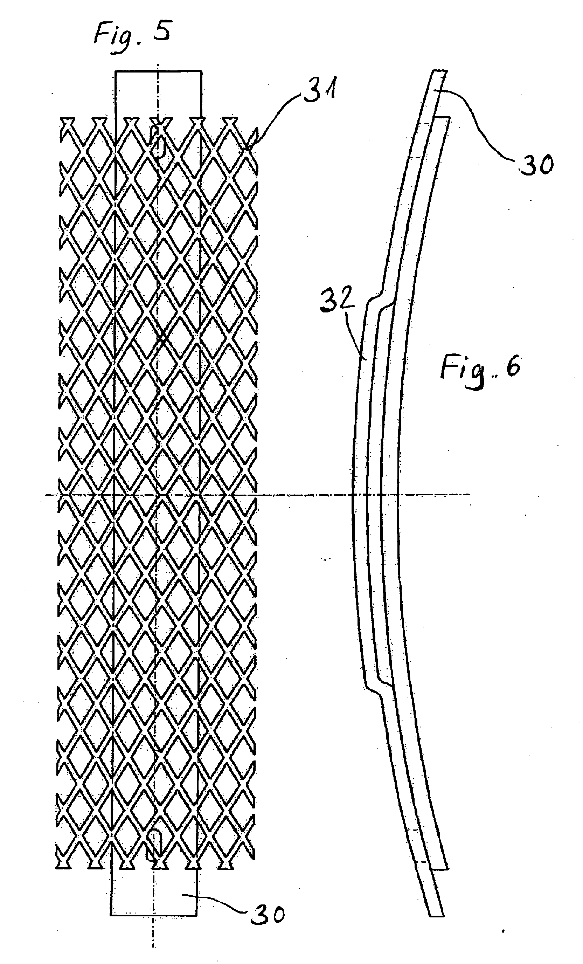

Eine sinnvolle Abwandlung der in den Fig. 1 bis 3 gezeigten Stahlarmierung ist dadurch möglich, dass eine schmale Einlage 30 in ihrem mittleren Längenbereich mit einer erhabenen Sicke 32 versehen ist. Eine solche Ausführungsform ist in den **Figuren 5 und 6** zu sehen, wobei die Sicke 32 in Längsrichtung parallel zum Bremsrücken 21 und zur Einlage 30 gekrümmt sein kann. Durch die Sicke 32 kann das Streckmetallgitter 31 im Überdeckungsbereich mit dieser beim Eingießen der Stahlarmierung problemlos von der Schmelze durchflutet werden, wodurch sich eine verbesserte Anbindung der Stahlarmierung ergibt. Hierdurch kann die Breite des Streckmetallgitters ggf. entsprechend reduziert werden, was Kostenvorteile erbringen kann. Außerdem kann die Sicke 32 in der Gussform in bereits erläuterter Weise als Distanzmittel dienen.

Alternativ kann es zweckmäßig sein, anstelle einer zweiteiligen Stahlarmierung eine einteilige Stahlarmierung vorzusehen. Wie aus der Schnittdarstellung nach **Figur 4** zu entnehmen ist, kann hierzu eine breite Einlage 40 verwendet werden, die mit mehreren Durchtrittsöffnungen 41 versehen ist, welche beim Eingießen der Einlage 40 vom Gussmaterial durchflutet werden. Diese breite Einlage 40 weist im Querschnitt gesehen im Mittelbereich eine erhabene Stufe 42 ähnlich einer Blechsicke auf, die im eingebetteten Zustand den Boden des Portals der Querbrücke 22 bildet.

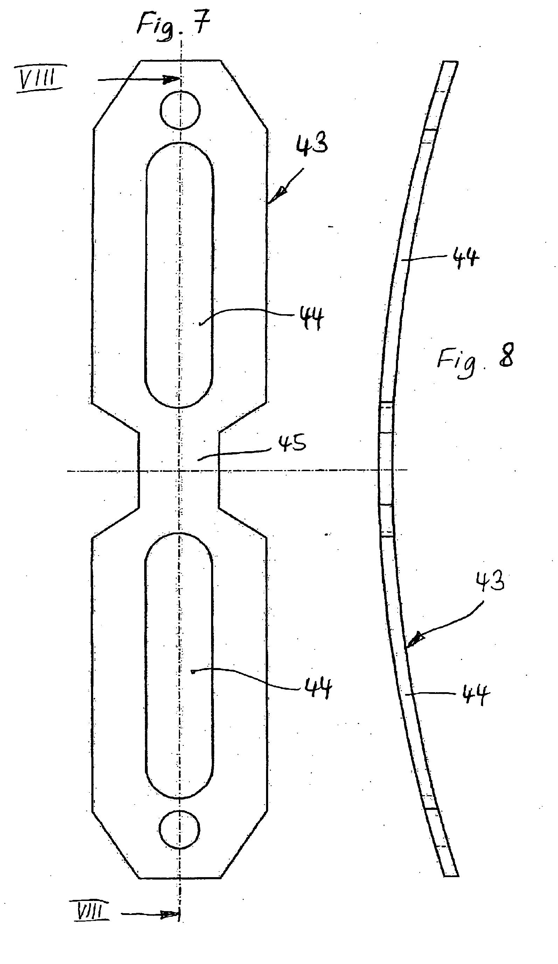

Eine weitere breite Einlage 43, die aus einem gebogenen Stahlblech besteht und als Armierung im Bremsklotz 20 wirksam ist, lässt sich den **Fig. 7 und 8** entnehmen. Diese Einlage 43 umfasst zwei Langlochabschnitte, aus denen mittig jeweils ein Langloch 44 ausgespart ist. Die beiden der Länge nach hintereinander angeordneten Langlochbereiche sind durch einen länglichen Steg 45 miteinander verbunden, so dass sich insgesamt die Form einer langgestreckten 8 ergibt. Hier werden die Langlöcher beim Eingießen der Einlage 43 über große Längenbereiche vom Gussmaterial durchflutet. Durch die Verjüngung der Einlage im Bereich des Verbindungssteges 45 ergeben sich außerdem zwei keilförmige Vertiefungen, durch welche sich eine zusätzliche Verankerung ergibt. Durch die keilförmigen bzw. grabenartigen Vertiefungen wird außerdem im Mittelbereich der Platz für sehr massive Pfeiler der Querbrücke 22 geschaffen. Die Bruchsicherheit der Querbrücke 22 ist aber für den Bremsklotz 20 von elementarer Bedeutung.

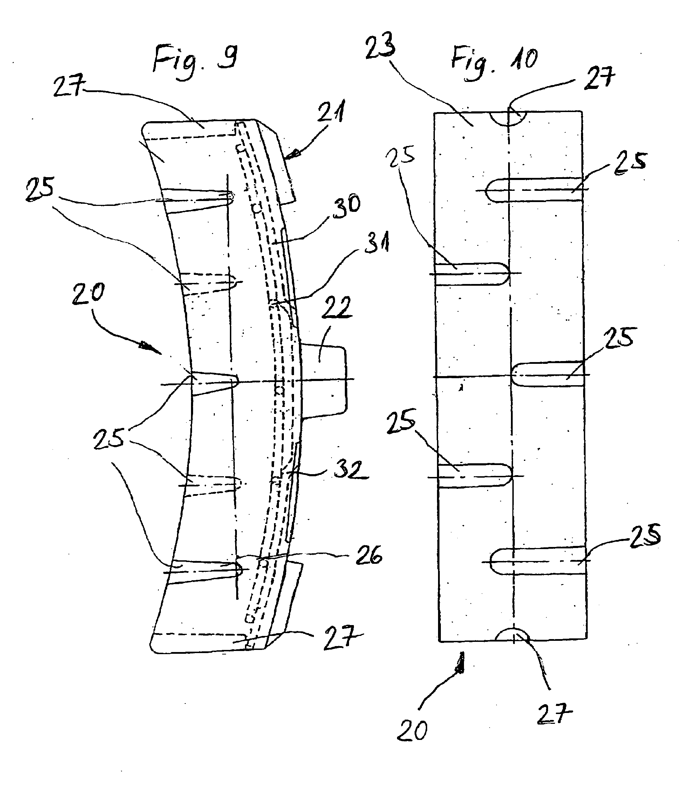

Bei der Ausführungsform nach den **Figuren 9 und 10** ist eine besondere Anordnung und Verteilung der Dehnfugen 25 gezeigt, welche unter anderem den Einschleifvorgang der Bremssohle 23 besonders fördert. Hierbei befinden sich die Dehnfugen 25 abwechselnd auf der linken und rechten Seite der Bremssohlenreibfläche und verlaufen bis zu einer Mittelzone der Reibfläche. Dabei erstrecken sich die drei mittleren Dehnfugen 25 exakt bis zur Mittellängsachse der Bremssohle, während die beiden endnahen Dehnfugen 25 eine größere Länge aufweisen und noch etwa ein Drittel von der gegenüberliegenden Hälfte der Reibfläche durchsetzen. Außerdem vergrößert sich die Tiefe der Dehnfugen 25 von der Mitte des Bremsklotzes 20 zu seinen Enden hin so, dass die dem Bremsrücken 21 zugewandten Enden der Dehnfugen auf einer Ebene 26 liegen, die sich rechtwinklig zur Mittelquerebene des Bremsklotzes erstreckt. Außerdem sind an den Stirnseiten der Bremssohle 23 die beiden Halteballen 27 zu erkennen, die aufgrund der Positionierung der Enden der Stahlarmierung in der Gussform über Haltemittel entstehen.

Versuche haben ergeben, dass der als integrales Gussteil ausgebildete Bremsklotz eine doppelt so hohe Lebensdauer bzw. Laufleistung erreicht wie ein handelsüblicher Bremsklotz, wenn er aus einer thermisch und mechanisch hoch belastbaren Gusslegierung mit der bereits genannten Zusammensetzung besteht.

### BEZUGSZEICHENLISTE

- 20: Bremsklotz
- 21: Bremsrücken
- 22: Querbrücke
- 23: Bremssohle
- 24: Verschleißmarke
- 25: Dehnfuge
- 26: Ebene
- 27: Halteballen

- 30: Einlage (schmal)
- 31: Streckmetallgitter
- 32: Sicke

- 40: Einlage (breit)
- 41: Durchtrittsöffnung
- 42: Stufe (erhaben)
- 43: Einlage (breit/Kettenform)
- 44: Langloch
- 45: Verbindungssteg

## Patentansprüche

1. Bremsklotz (20) für Reibungsbremsen von Schienenfahrzeugen mit einer verschleißfesten Bremssohle (23) aus, insbesondere hoch phosphorhaltigem Gusseisen, deren Reibfläche entsprechend dem Umfang des zu bremsenden Laufrades gekrümmt ist, und mit einer Bruchsicherung des Gussteils durch eine wenigstens teilweise umgossene Stahlarmierung, wobei vom Bremsrücken (21) des Bremsklotzes eine Querbrücke zur Übertragung der von der Bremsanlage erzeugten Bremskraft absteht,
wobei Bremssohle (23) und Bremsrücken (21) des Bremsklotzes (20) unter weitgehender Einbettung der Stahlarmierung zu einem integralen Gussteil vereinigt sind, welches die Querbrücke (22) des Bremsklotzes (20) mitumfasst, **dadurch gekennzeichnet, dass** das integrale Gussteil aus einer thermisch und mechanisch hoch belastbaren Gusslegierung besteht, deren Härte nicht größer als 275 HB ist und die Gusslegierung aus einem Basiseisen besteht, welches außer Eisen
| | |
|---|---|
| C | 2,6 bis 3,4 Gew.-% |
| Si | 1,2 bis 2,6 Gew.-% |
| P | 2,0 bis 3,5 Gew.-% |
| Mn | < 0,9 Gew.-% |
| S | < 0,2 Gew.-% |
enthält, und dem kleine Mengen von Kupfer und/oder Vanadium und/oder Cer und/oder Seltenerd-Mineralien zulegiert sind.

2. Bremsklotz nach Anspruch 1,
**dadurch gekennzeichnet,**
**dass** die Stahlarmierung des Bremsklotzes (20) aus Flachmaterial besteht, das nahe seiner konvex gekrümmten Rückseite in das Gussteil eingebettet ist und einen Querschnitt von mindestens 100 mm² aufweist, wobei sich das Flachmaterial nahezu über die gesamte Länge des Bremsklotzes (20) erstreckt und über seine Länge unter Anpassung an die Krümmung der Reibfläche des Bremsklotzes (20) gebogen ist.

3. Bremsklotz nach Anspruch 2,
**dadurch gekennzeichnet,**
**dass** als Stahlarmierung eine schmale Einlage (30) aus Bandstahl vorgesehen ist, die mittels eines aufgeschweißten Streifens aus Loch- oder Gitterblech (Streckmetallgitter 31) verbreitert ist.

4. Bremsklotz nach Anspruch 2,
**dadurch gekennzeichnet,**
**dass** als Stahlarmierung eine breite Einlage (40, 43) aus Bandstahl vorgesehen ist, die von mehreren Durchtrittsöffnungen für die Schmelze des Eisengusses durchsetzt ist.

5. Bremsklotz nach Anspruch 3 oder 4,
**dadurch gekennzeichnet,**
**dass** die Einlage (32, 40) aus Bandstahl mit einer eingeformte Sicke (32, Stufe 42) versehen ist.

6. Bremsklotz nach Anspruch 5,
**dadurch gekennzeichnet,**
**dass** der erhabene Flächenbereich der Sicke (32, Stufe 42) bei eingegossener Einlage (32, 40) flächenbündig in die konkav gekrümmte Rückseite des Bremsklotzes (20) eingepasst ist.

7. Bremsklotz nach Anspruch 1,
**dadurch gekennzeichnet,**
**dass** aus die Bremssohle (23) mehrere Dehnfugen (25) aufweist, die von der Reibfläche der Bremssohle (23) ausgehen und über deren Länge verteilt angeordnet sind, wobei sie sich in Breitenrichtung der Bremssohle (23) erstrecken.

8. Bremsklotz nach Anspruch 7,
**dadurch gekennzeichnet,**
**dass** die Dehnfugen (25) abwechselnd von der rechten und linken Seite der Bremssohle (23) ausgehen und sich bis zu einer Mittelzone der Reibfläche erstrecken.

9. Bremsklotz nach Anspruch 1,
**dadurch gekennzeichnet,**
**dass** die Bremssohle (23) an ihren beiden Enden jeweils einen Halteballen (27) aufweist.

10. Bremsklotz nach Anspruch 2,
**dadurch gekennzeichnet,**
**dass** an der Außenseite die Bremssohle (23) in einem geringen Abstand zur Stahlarmierung mehrere Verschleißmarken (24) angeordnet sind.

## Claims

1. Brake block (20) for friction brakes of rail vehicles with a wear resistant brake shoe (23), particularly consisting of highly phosphoric cast iron, wherein the brake shoe's friction surface is curved corresponding to the circumference of the wheel to be braked, and with a breakage protection of the cast iron part by means of an at least partially cast in steel reinforcement, wherein a transverse bridge for transmitting the brake force generated by the brake arrangement protrudes from the brake back side (21) of the brake block, wherein brake shoe (23) and brake back side (21) of the brake block (20) are combined to form an integral cast part by extensively embedding the steel reinforcement, the integral cast part also comprising the transverse bridge (22) of the brake block (20), **characterized in that** the integral cast part consists of a high mechanical and thermal load capacity cast alloy, whose hardness is not greater than 275 HB and wherein the cast alloy is a basic iron containing aside from iron
| | |
|---|---|
| C | 2.6 to 3.4 weight % |
| Si | 1.2 to 2.6 weight % |
| P | 2.0 to 3.5 weight % |
| Mn | < 0.9 weight % |
| S | < 0.2 weight % |
and the cast alloy having small quantities of copper and/or vanadium and/or cerium and/or rare earth minerals alloyed.

2. Brake block according to claim 1,
**characterized in that** the steel reinforcement of the brake block (20) consists of flat material embedded into the cast part near its convexly curved back side and having a cross sectional area of at least 100 mm², wherein the flat material extends across almost the entire length of the brake block (20) and wherein the flat material is bent over its length for adapting to the curve of the friction surface of the brake block (20).

3. Brake block according to claim 2,
**characterized in that**
the steel reinforcement is arranged as a narrow inlay (30) of band steel widened by means of a welded on strip of perforated sheet or grid sheet (expanded metal grid 31).

4. Brake block according to claim 2,
**characterized in that**
the steel reinforcement is arranged as a broad inlay (40, 43) of band steel crossed by a multitude of openings for the molten mass of the iron casting.

5. Brake block according to claim 3 or 4,
**characterized in that** the inlay (32, 40) of band steel is provided with a moulded in seam (32, step 42).

6. Brake block according to claim 5,
**characterized in that**
with cast in inlay (32, 40) the embossed area range of the seam (32, step 42) is fit into the concavely curved back side of the brake block (20).

7. Brake block according to claim 1,
**characterized in that**
the brake shoe (23) exhibits a multitude of expansion joints (25) originating from the friction surface of the brake shoe (23) and arranged over the length of the brake shoe (23), wherein the expansion joints (25) extend in transverse direction of the brake shoe (23).

8. Brake block according to claim 7,
**characterized in that**
the expansion joints (25) alternately originate from the right or left side of the brake shoe (23) and extend to a central zone of the friction surface.

9. Brake block according to claim 1,
**characterized in that**
the brake shoe (23) exhibits a respective holding recess (27) at both of its ends.

10. Brake block according to claim 2,
**characterized in that**
at the exterior side of the brake shoe (23) a multitude of wear marks (24) are arranged in a small distance to the steel reinforcement.

## Revendications

1. Sabot de frein (20) pour des freins à friction de véhicules sur rails avec une semelle de frein (23) résistante à l'usure, en particulier en fonte à teneur élevée en phosphore, dont la surface de frottement est courbée en fonction du contour de la roue à freiner, et avec une goupille de cisaillement de la pièce en fonte par une armature en acier au moins partiellement coulée, un pont transversal dépassant du dos du sabot de frein (21) pour la transmission de la force de freinage générée par le circuit de frein,
où la semelle de frein (23) et le dos (21) du sabot de frein (21) sont réunis pour former une pièce en fonte intégrale par enrobage étendu de l'armature en acier, ladite pièce comprenant le pont transversal (22) du sabot de frein (20), **caractérisé en ce que** la pièce de fonte intégrale est composée d'un alliage de fonte à haute résistance thermique et mécanique, dont la dureté n'est pas supérieure à 275 HB, et **en ce que** l'alliage de fonte est composé d'un fer de base, lequel contient, en plus du fer :
| | |
|---|---|
| C | de 2,6 à 3,4 % en poids |
| Si | de 1,2 à 2,6 % en poids |
| P | de 2,0 à 3,5 % en poids |
| Mn | < 0,9 % en poids |
| S | < 0,2 % en poids |
et auquel sont alliées de petites quantités de cuivre et/ou de vanadium et/ou de cérium et/ou de minéraux de terres rares.

2. Sabot de frein selon la revendication 1,
**caractérisé**
**en ce que** l'armature en acier du sabot de frein (20) est en matériau plat incorporé dans la pièce de fonte à proximité de sa face de dos à courbure convexe, et présente une section minimale de 100 mm², le matériau plat s'étendant sur presque toute la longueur du sabot de frein (20) et étant courbé sur sa longueur pour ajustement à la courbure de la surface de frottement du sabot de frein (20).

3. Sabot de frein selon la revendication 2,
**caractérisé**
**en ce qu'**une garniture mince (30) en feuillard est prévue comme armature en acier, laquelle est élargie au moyen d'une bande soudée en tôle perforée ou en grillage métallique (grillage en métal déployé 31).

4. Sabot de frein selon la revendication 2,
**caractérisé**
**en ce qu'**une garniture large (40, 43) en feuillard est prévue comme armature en acier, laquelle est percée de plusieurs ouvertures de passage pour la fonte d'acier en état de fusion.

5. Sabot de frein selon la revendication 3 ou la revendication 4,
**caractérisé**
**en ce que** la garniture (32, 40) en feuillard est pourvue d'une moulure formée (32, degré 42).

6. Sabot de frein selon la revendication 5,
**caractérisé**
**en ce que** la zone superficielle convexe de la moulure (32, degré 42) est ajustée dans le dos à courbure concave du sabot de frein (20), de niveau avec la surface lorsque la garniture (32, 40) est coulée.

7. Sabot de frein selon la revendication 1,
**caractérisé**
**en ce que** la semelle de frein (23) présente plusieurs joints de dilatation (25) partant de la surface de frottement de la semelle de frein (23) et distribués sur la longueur de celle-ci, en s'étendant dans le sens de la largeur de la semelle de frein (23).

8. Sabot de frein selon la revendication 7,
**caractérisé**
**en ce que** les joints de dilatation (25) partent alternativement du côté gauche et du côté droit de la semelle de frein (23) et s'étendent jusqu'à une zone centrale de la surface de frottement.

9. Sabot de frein selon la revendication 1,
**caractérisé**
**en ce que** la semelle de frein (23) comporte une balle de maintien (27) à chacune de ses deux extrémités.

10. Sabot de frein selon la revendication 2,
**caractérisé**
**en ce que** plusieurs marques d'usure (24) sont disposées sur la face extérieure de la semelle de frein (23), à faible distance de l'armature en acier.
